# FASCICULE DE BREVET EUROPEEN

(11) **EP 1 034 312 B1**
(45) Date de publication et mention de la délivrance du brevet: **16.01.2002**
(21) Numéro de dépôt: 98963502.4
(22) Date de dépôt: 20.11.1998
(51) Int. Cl.: C21B 13/14

(54) **INSTALLATION DE REDUCTION D'OXYDES DE FER ET DE FUSION DU FER**
ANLAGE ZUR REDUKTION VON EISENOXIDEN UND SCHMELZEN VON EISEN
INSTALLATION FOR REDUCING IRON OXIDES AND SMELTING IRON

(30) Priorité: 03.12.1997 EP 97870196; 06.02.1998 EP 98870023; 06.03.1998 EP 98870047
(43) Date de publication de la demande: 13.09.2000
(73) Titulaire: SIDMAR N.V., B-9042 Gent (BE)
(72) Inventeur: MONTEYNE, Guido, B-9971 Lembeke (BE)
(74) Mandataire: Kihn, Pierre Emile Joseph
(86) Numéro de dépôt international: EP9807550
(87) Numéro de publication internationale: WO9928512

(56) Documents cités:
- EP-A- 0 094 707
- DE-A- 2 133 860
- FR-A- 1 297 920
- FR-A- 1 504 346
- FR-A- 2 262 114
- GB-A- 1 143 527
- GB-A- 1 213 641
- US-A- 5 542 963

## Description

### Objet de l'invention

La présente invention concerne une nouvelle installation de réduction d'oxydes de fer avec production d'une phase liquide de fonte, permettant de produire du métal à l'état fondu au départ d'oxydes de fer, tels par exemple que des minerais ou des produits recyclés et de charbon et/ou de gaz. L'invention vise à obtenir un certain nombre d'avantages économiques qui seront décrits ci-après par rapport aux techniques connues.

### Arrière-plan technologique à la base de l'invention

L'accroissement de la production électrique d'acier a augmenté la nécessité de disposer de voies alternatives permettant d'éviter l'utilisation de ferrailles, les ferrailles de qualité adéquate devenant de plus en plus rares.

De même, la concurrence entre producteurs et la stagnation des prix de vente, ainsi que les pressions écologiques grandissantes poussent les aciéristes à développer des nouveaux procédés de production à des prix de revient plus bas et moins polluants.

Diverses techniques de réduction de l'oxyde de fer dite directe (DRI) ont été développées récemment dans ce but. Les DRI sont notamment obtenus par exemple par réduction gazeuse (procédé HYL, Midrex) ou par réduction à partir de sources carbonées comme dans les procédés SL-RN, Fastmet, Inmetco ou Circofer, Comet ou suivant la demande de brevet européen déposée par la demanderesse le 28/01/1998 sous le numéro 98200242.0. La plupart de ces techniques présentent comme inconvénient majeur le fait que l'on obtient un produit à l'état réduit, qualifié généralement d'éponges de fer, de très faible densité et à surface spécifique élevée favorisant une ré-oxydation du fer. Ceci provoque des difficultés de stockage et de transport, et dans la plupart des cas, rend nécessaire un compactage onéreux pour permettre la mise en oeuvre ultérieure. A titre d'exemple, les éponges de fer présentent généralement une densité apparente de 1,5 à 2 kg/dm³ et sont compactées jusqu'à une valeur de 5 à 5,5 kg/dm³.

De plus, la chaleur latente importante qui est présente dans le matériau réduit avant refroidissement est perdue.

Certaines des techniques de réduction proposées sont basées sur l'emploi de sources carbonées solides, comme du charbon, qui sont ajoutées en excès pour assurer une réduction suffisante. Cet excès de sources carbonées est ajouté à d'autres produits résiduaires contenant des cendres, dont il faut se débarrasser.

Tous ces inconvénients peuvent être évités avec une installation selon l'invention mettant en oeuvre un processus de réduction / fusion par étapes . La fonte brute produite en phase fondue peut être utilisée dans toutes les applications habituelles telles que la coulée en petits lingots ou les opérarions d'affinage en aciérie, par exemple en aciérie électrique ou dans des convertisseurs à oxygène.

Le brevet anglais GB 1,143,527 décrit un procédé de production de fonte en deux étapes dans lequel le minerai de fer est réduit dans un premier four et est transféré par l'effet de la gravité directement à chaud dans un four de fusion. On pousse les morceaux de fer ou les « pellets » préréduits avec une vitesse telle qu'ils traversent la couche de laitier qui se trouve sur le bain de fonte fondue. Cette vitesse est acquise en faisant tomber les morceaux de fer ou les « pellets » préréduits d'une certaine hauteur dans le bain. Selon un mode particulier les morceaux de fer ou les « pellets » préréduits sont déposés sur une plate-forme inclinée et sont poussés périodiquement au moyen d'un piston dans une conduite dans laquelle ils sont accélérés par les forces de gravité d'une manière suffisante pour traverser la couche de laitier qui se forme au-dessus du bain d'acier liquide dans le four de fusion. Les gaz du four de fusion sont amenés dans le four de réduction par le conduit d'alimentation du four de fusion en fer réduit.

Le brevet US 5,542,963 décrit une installation de production de fonte en deux étapes dans lequel le minerai de fer est réduit dans un premier four et est transféré par l'effet de la gravité directement à chaud dans un four de fusion. Les morceaux de fer ou les « pellets » préréduits sont transférés à l'aide d'une vis d'Archimède dans le four de fusion. Les gaz du four de fusion sont amenés dans le four de réduction par un conduit séparé du conduit d'alimentation du four de fusion en fer réduit.

### Buts de l'invention

La présente invention vise tout particulièrement à transformer des oxydes de fer réduits directement après leur production et de manière continue pour obtenir de la fonte à l'état liquide dans des conditions économiquement plus avantageuses et avec des équipements technologiques plus compacts et améliorés par rapport aux équipements existants.

On vise en particulier la production en continu d'une fonte de préférence désulfurée et séparée du laitier, d'une consommation énergétique réduite et économique de par le choix des combustibles et de par une récupération d'énergie par recyclage direct des gaz de combustion dans l'installation en amont.

### Eléments de l'invention

La présente invention concerne une installation pour la production de fonte liquide comprenant un four (1) de réduction pour réduire des oxydes de fer et un four de fusion (3) contenant une phase fondue de fonte et du laitier pour fondre les oxydes de fer réduits, ainsi que des unités d'évacuation de la fonte vers une installation d'affinage de la fonte (5) et des unités d'évacuation du laitier vers une installation de traitement du laitier (6), le four de réduction (1) et le four de fusion (3) étant reliés par un ou plusieurs conduits pour l'alimentation du four de fusion (3) en mélange de fer métallisé provenant du four de réduction par transfert gravitaire et un ou des conduits d'évacuation (4) des gaz de combustion du four de fusion (3) vers le four (1) de réduction, caractérisé en ce que le(s) conduit(s) d'alimentation est (sont) muni(s) de clapets régulateurs qui permettent d'accumuler une masse de mélange métallisé suffisamment importante pour pénétrer avec force après une hauteur de chute la fonte liquide suite à son déversement.

Le procédé de mise en oeuvre de l'installation selon l'invention comporte au moins deux étapes consécutives, dont la première est une étape classique de réduction jusqu'à un degré de métallisation de l'ordre de 80 à 94%, et de préférence de 85 à 90% avec ajout de fondants pour la mise en nuance du laitier à produire dans la deuxième étape. La deuxième étape est une étape d'élaboration de la fonte qui suit immédiatement la première étape.

Pour la deuxième étape d'élaboration de la fonte, on procède en deux sous-étapes successives. D'abord, on procède à une réduction complémentaire de l'oxyde de fer jusqu'à quasiment 100%. Ceci peut être réalisé à l'aide d'un réacteur compact aveç un noyau permettant le passage de gaz ou avec une lance d'injection, avec alimentation de charbon préchauffé par le haut, on transfère immédiatement le mélange de fer quasiment totalement métallisé, de gangue, de fondants et d'excès de charbon directement dans un four contenant une phase fondue de fonte, le métal et le laitier étant ensuite évacués, de préférence en continu, par exemple par débordement.

Les oxydes de fer réduits de la première étape de réduction peuvent résulter de n'importe quel procédé de réduction, qui peut se réaliser entre autres dans un four à sole tournante, dans un four à cuve, dans un four rotatif ou dans un four à lit fluidisé. La mise en oeuvre de l'invention est d'autant plus intéressante du point de vue économique que le produit réduit se trouve à température plus élevée, c'est-à-dire comporte plus de chaleur latente.

Selon une première variante d'exécution, l'énergie nécessaire pour la fusion peut être fournie par induction ou éventuellement à l'aide d'un arc électrique, par exemple un arc submergé.

Il est également possible de procéder, selon une deuxième variante d'exécution, à une réduction complémentaire et à une fusion continue dans une installation unique constituée essentiellement par l'unité d'alimentation de la matière à traiter qui provient, de préférence directement, de la première étape à une température aussi haute que possible. Cet élément d'alimentation débouche à une extrémité d'un four tubulaire rotatif dont l'extrémité opposée est ouverte et raccordée d'une part à une unité d'évacuation de la fonte et du laitier, de préférence en forme d'entonnoir, et d'autre part à une unité d'évacuation des gaz. Un brûleur situé du côté de l'alimentation assure l'apport thermique nécessaire pour la fusion de la matière à traiter tandis qu'une lance à injection, située à l'autre extrémité du four, réalise la désulfurisation du bain. Le brûleur peut être placé côté vidange ou même être dédoublé si le comportement de la fusion l'exige.

Dans ce cas, les éléments constitutifs susmentionnés de l'installation sont de préférence montés sur un châssis commun de manière à pouvoir incliner l'ensemble. De manière classique, le four est de préférence monté sur des couronnes reposant sur des galets entraînés par des moteurs et transmissions adéquats.

L'inclinaison du châssis qui supporte, entre autres, le four rotatif peut être commandée de façon à réaliser un mouvement continu de bascule du four qui a pour effet de ramener en intermittence la fonte chaude en provenance de l'extrémité d'évacuation du four vers l'extrémité d'alimentation de celui-ci et par voie de conséquence, de provoquer un mouvement d'écoulement pulsé de la fonte à la sortie non plus continu mais discontinu ou encore mieux pulsé. On assure ainsi une meilleure fusion de la charge, en ramenant depuis la sortie d'évacuation une masse fondue chaude qui se mélange avec le bain liquide plus froid se trouvant à l'extrémité d'alimentation. Ceci provoque simultanément une homogénéisation de la teneur en carbone qui subit un accroissement lors du déplacement depuis l'extrémité d'alimentation vers l'extrémité d'évacuation.

L'homogénéisation accroît la capacité de fusion et la capacité réductrice favorisant ainsi les propriétés du bain fondu. L'accroissement de la teneur en carbone entraîne un abaissement de la température de solidification de la fonte, ce qui influence également très favorablement le déroulement du processus.

La configuration générale du four constitue également un facteur important pour influencer le processus de fusion de l'éponge de fer. Il est apparu qu'un diamètre intérieur plus important à l'extrémité d'alimentation comparé à l'extrémité d'évacuation convient particulièrement à cet effet, en particulier en combinaison avec l'effet de basculement précité, en accroissant le volume de la fonte, de même qu'en accroissant l'effet de pompage et finalement en accroissant la capacité de fusion.

La caractéristique essentielle de l'invention est que tous les transferts depuis l'unité de production du DRI vers l'étape d'élaboration de la fonte s'effectuent par gravité en veillant à réduire les pertes thermiques.

On observera que la technique de l'invention se différentie essentiellement des solutions de l'état de la technique par le fait que tout d'abord, dans les différentes variantes d'exécution, on réalise une réduction quasi complète des oxydes de fer mis en oeuvre et que les matières résultantes circulent directement vers un bain constitué par une phase de fonte liquide, sans interruption et surtout sans refroidissement important entre les étapes.

On veille à ce que la fonte liquide produite présente une teneur précisément dosée en carbone supérieure à 3%, de préférence de l'ordre de 4,5 à 5,5%, ce qui généralement, pour la plupart des minerais de fer mis en oeuvre, permet d'obtenir une fonte fondue présentant des caractéristiques de fluidité favorables.

D'autres détails relatifs à l'invention seront décrits plus en détails ci-après.

Selon la première variante d'exécution précitée, on procède en sorte que le gaz produit dans le four sous-jacent soit alimenté directement via un conduit d'évacuation des gaz vers la première étape pour apporter sa contribution par sa chaleur latente et sa capacité réductive.

Dans le conduit d'alimentation du mélange métallisé provenant de la première étape, un clapet régulateur permet, au fur et à mesure du déchargement du mélange métallisé, de créer une zone tampon d'un poids suffisant pour, lors de son déversement, pénétrer avec force, également par suite de sa hauteur, dans la surface du liquide du four sous-jacent, ce qui accélère considérablement sa fusion.

Ce four de fusion sous-jacent est pourvu d'un équipement de déchargement intermittent de la fonte liquide, de préférence pour la simplicité sous forme d'un siphon dans lequel la fonte et le laitier sont séparés de manière en soi connue. Le laitier est de préférence granulé ou peut coaguler dans des bassins prévus à cet effet. Les deux formes de laitier sont des sous-produits connus commercialisables. La fonte brute à l'état liquide constitue un produit particulièrement utile, par exemple dans les process d'affinage tels que les fours électriques (EAF) ou les convertisseurs à oxygène (BOF).

Bien que l'invention ait été décrite pour la réduction d'oxydes de fer, elle peut s'appliquer cependant également pour la réduction d'autres oxydes métalliques ou mélanges de ceux-ci avec des oxydes de fer, en particulier les métaux utilisés conjointement avec le fer pour la production d'alliages tels que l'acier inox. Elle s'applique également pour la récupération des poussières des hauts fourneaux, des convertisseurs et des fours électriques.

Le procédé de mise en oeuvre de l'installation selon l'invention en deux étapes successives avec déplacement gravitaire permet également de traiter des sous-produits recyclables provenant d'installations sidérurgiques.

La fonte produite peut être utilisée directement à l'état fondu mais également sous forme de lingots.

L'absence quasi totale d'oxydes de fer en fin de la deuxième étape garantit une durée de vie prolongée pour le revêtement réfractaire de l'embouchure de déchargement du réacteur et pour le four à induction.

L'utilisation de l'installation de l'invention se caractérise par une productivité très élevée : dans le processus de production d'acier par suite de la mise en oeuvre de produits de départ à l'état liquide au lieu de matières solides produites notamment dans le procédé DRI.

Le choix du procédé DRI pour réaliser la première étape est guidé par les conditions les plus économiques en fonction des circonstances locales pour être couplé avec la deuxième étape du procédé.

L'utilisation de l'installation selon l'invention présente également un certain nombre d'avantages du point de vue purement énergétique.

Le couplage continu des deux étapes évite toute perte d'énergie. D'autre part, les gaz utiles libérés par la deuxième étape peuvent être réutilisés. L'excès de combustible (charbon) provenant de la première étape peut être utilisé avantageusement dans la deuxième étape. Le charbon en excès participe dans le conduit d'alimentation à la réduction finale des oxydes de fer non réduits; le charbon en excès dans la seconde étape participe à la mise en nuance de la fonte.

Les conduits d'alimentation reliant la première et la seconde étapes permettent de réaliser une installation de forme particulièrement compacte, ce qui réduit également les investissements. L'unité de fusion de la deuxième étape se présente avec un encombrement très réduit.

Finalement, la technique permet une utilisation optimale des matières de recyclage.

Du point de vue qualitatif, il convient de noter que la fonte constitue une matière première bien plus stable (plus de ré-oxydation) et avantageuse que les ferrailles, qui occasionnent des problèmes qualitatifs énormes par suite des impuretés présentes. La fonte contient une source énergétique complémentaire sous forme du carbone présent. La désulfuration se fait comme pour la fonte d'un haut fourneau.

Ainsi qu'il a été indiqué, on peut, selon une deuxième variante d'exécution de l'invention, également réaliser dans une installation unique les deux sous-étapes constituant la deuxième étape de l'invention.

Avantageusement, dans ce cas, l'unité d'alimentation de cette installation est constituée d'une goulotte d'alimentation ou de tout autre système d'alimentation adéquat tel qu'une vis d'Archimède, qui est monté sur un disque dans lequel débouche également le brûleur universel. Sur ce disque peuvent être montés simultanément un injecteur de charbon en poudre afin d'une part d'éviter une réoxydation de la charge, et d'autre part de réaliser la réduction finale de l'éponge de fer et d'ajouter au bain le carbone nécessaire à l'obtention d'une fonte de qualité.

Ce disque est fixe et se raccorde à une extrémité du four rotatif, par exemple par le biais de joints à double étanchéité montés sur un compensateur, la chambre intermédiaire du joint pouvant de préférence être mise sous pression de gaz inerte, de préférence d'azote, l'ensemble permettant le mouvement relatif entre le disque fixe et le four rotatif et reprenant les dilatations thermiques.

De manière similaire, à l'autre extrémité du four rotatif des dispositifs similaires reprennent la dilatation et permettent la rotation de l'extrémité opposée du four par rapport à l'unité d'évacuation de la fonte et du laitier.

L'unité d'alimentation est elle-même raccordée à un conduit ou à une goulotte raccordé à l'unité de production de DRI de la première étape. Le point de pivotement du châssis, en vue d'ajuster l'inclinaison de l'axe de rotation du four de fusion, se situe idéalement au niveau du centre de la surface de raccordement du conduit d'alimentation. Ce dispositif permet de régler le débit de fonte à évacuer ou même d'en interrompre le versement, par exemple pour changer le dispositif d'évacuation de la fonte liquide.

Avantageusement un clapet, de préférence un double clapet, qui permet le passage des matières solides mais empêche un reflux gazeux vers le four de production de DRI, peut être prévu, de préférence en amont du point de rotation susmentionné.

De la même manière, l'unité d'évacuation des gaz est raccordée par un compensateur du même type que ci-dessus à un conduit fixe extérieur.

L'ensemble de l'installation est bien entendu pourvu d'un revêtement en matière réfractaire.

D'autres détails et caractéristiques de l'invention apparaîtront à la lecture de la description qui suit d'une forme d'exécution préférée de l'invention.

La fonte produite peut être utilisée pour l'élaboration d'aciers au départ par exemple de fours électriques ou de convertisseurs de type BOF, dans le but de réduire la durée du cycle d'élaboration de ceux-ci par rapport aux cycles à enfournement de DRI.

L'invention réalise une conception constructive qui est simple, compacte et bon marché.

Elle utilise également des sources énergétiques peu coûteuses, telles que du gaz naturel, du gaz de cokerie et/ou du charbon en poudre ainsi que des combustibles provenant de déchets recyclés à haute valeur énergétique tels que des huiles, des matières plastiques, etc. qui ont été conditionnés à cet effet, comparées aux fours classiques électriques, en particulier aux fours à induction ou à arc.

L'installation de l'invention vise encore à obtenir une durée de vie accrue du revêtement réfractaire du fait que les phénomènes typiques d'érosion et d'attaque chimique apparaissant au niveau du laitier, par exemple dans un four électrique, sont évités du fait du brassage et tout particulièrement dans la seconde variante d'exécution de l'invention par suite de la rotation continue du four de fusion autour de son axe de rotation horizontal.

On peut également éviter le recours à une installation séparée de dépoussiérage et à obtenir une récupération quasiment totale de la chaleur latente des gaz de combustion dans les installations situées en amont du four de fusion.

Grâce à la conception spécifique des éléments constitutifs de l'installation, on peut réaliser de manière simple un échange d'une unité nécessitant un renouvellement du revêtement par une unité de rechange sans interruption significative de la production.

L'équipement de la zone de coulée est particulièrement simple et sûr, aucune machine de bouchage et de forage pour la coulée n'étant nécessaire comme dans le cas d'un plancher de coulée de haut fourneau.

L'invention permet donc de mettre en oeuvre un procédé économique de production de fonte, aussi bien pour les investissements que pour les frais d'exploitation, qui reste rentable même pour des petits modules ne produisant par exemple que 250 kt par an.

De manière générale, on peut envisager d'opérer avec un personnel plus réduit, du fait que l'installation et son utilisation sont à la fois simples et fiables, de même le degré de risque et par conséquent d'accident est très réduit par rapport aux installations connues.

Le procédé produit un laitier, de caractéristiques proches de celui des hauts fourneaux, pouvant être facilement valorisé ce qui n'est pas le cas du laitier produit par chargement direct de DRI dans un procédé d'élaboration de l'acier.

### Brève description des dessins

- La figure 1: représente le schéma général d'une installation selon l'invention.
- La figure 2: représente une installation avec conduits d'alimentation, conduit d'évacuation des gaz et four à arc submergé selon la première variante de l'invention.
- La figure 3: représente une coupe schématique d'une installation selon la seconde variante de l'invention, avec son raccordement à une goulotte d'alimentation du DRI ainsi que son raccordement à l'équipement d'évacuation de la matière traitée et à l'installation d'évacuation des gaz.
- La figure 4: représente une vue du disque fixe monté sur l'extrémité d'alimentation du four rotatif.
- La figure 5: représente une vue d'un dispositif de séparation de fonte liquide et de laitier, avec joint d'étanchéité permettant la rotation du four par rapport aux éléments non rotatifs de l'invention.
- La figure 6: représente une vue schématique d'une première forme avec un rétrécissement conique du four de l'amont vers l'aval.
- La figure 7: représente une vue schématique d'une seconde forme avec un rétrécissement en escalier de l'amont vers l'aval.
- La figure 8: représente schématiquement certains équipements complémentaires dans un four rotatif qui est représenté en coupe longitudinale.
- La figure 9: représente une coupe A-A au niveau de l'extrémité d'alimentation.

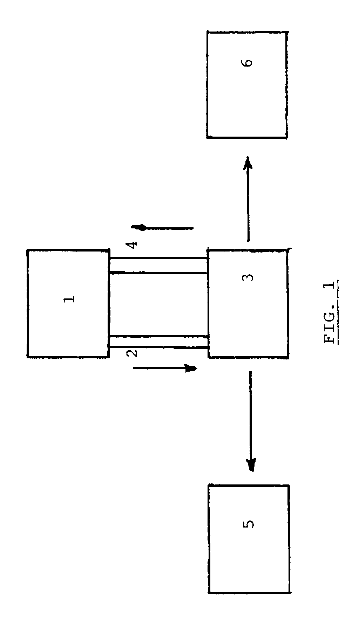

### Nomenclature pour la figure 1

1. Four de réduction des oxydes de fer
2. Conduit d'alimentation du four de fusion en fer métallisé
3. Four de fusion
4. Conduit d'évacuation des gaz de combustion du four de fusion
5 . Installation d'affinage de la fonte
6. Installation de traitement du laitier

### Description du schéma d'exécution de l'invention

Il est prévu, après une première étape classique de production DRI 1, de transférer le mélange métallisé (DRI) par un conduit d'alimentation 2 du four de fusion 3, Les gaz de combustion du four de fusion sont évacués par un conduit 4 vers le four DRI, tandis que la fonte est évacuée vers une installation d'affinage 5 et le laitier vers une installation de traitement du laitier 6.

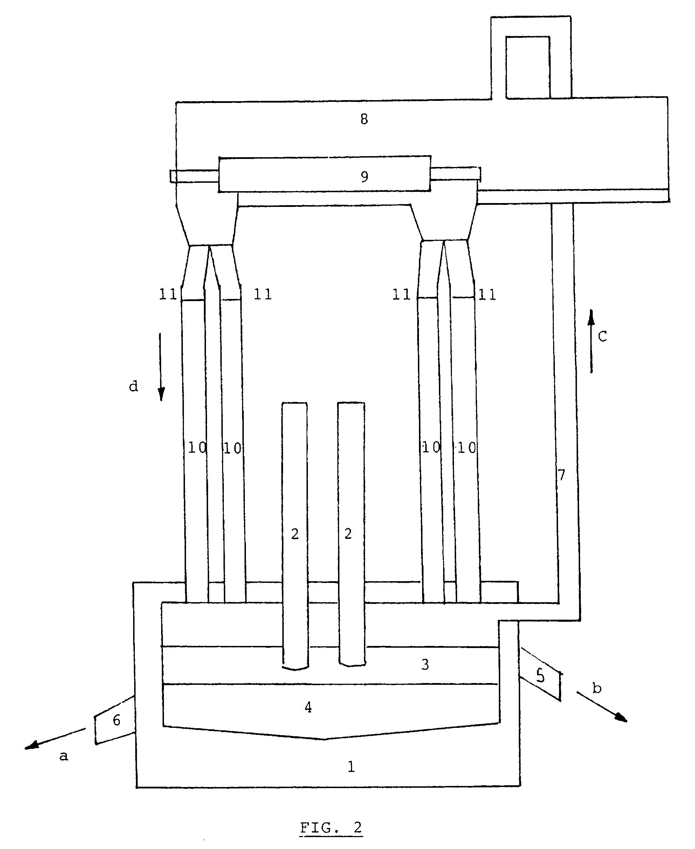

### Nomenclature pour la figure 2

1. Four électrique à arc submergé
2. Electrodes
3. Laitier
4. Fonte
5. Goulotte d'évacuation du laitier
6. Goulotte d'évacuation de la fonte
7. Conduit d'évacuation des gaz de combustion du four de fusion
8. Four de réduction d'oxydes de fer du type à sole tournante
9. Sole du four de réduction
10. Conduit d'enfournement du mélange métallisé
11. Clapet régulateur de débit
   a. Sens de l'évacuation de la fonte
   b. Sens de l'évacuation du laitier
   c. Sens de l'évacuation des gaz de combustion
   d. Sens de l'enfournement du mélange métallisé

### Description d'une forme d'exécution préférée de l'invention selon la première exécution (figure 2)

L'installation est formée par le four de réduction des oxydes de fer 3, par les conduits d'alimentation en DRI 10 et par le four électrique à arc submergé de fusion 1 dans lesquelles se déroulent successivement la première étape, le chargement en DRI et la fusion de celui-ci, ainsi que par le conduit d'évacuation de gaz 7.

Le DRI, à une température supérieure à 1000 °C, mélangé à un excès de charbon, à de la chaux et à d'autres agents, est évacué de la sole 9 dans l'un des quatre conduits d'évacuation 10. Un clapet régulateur de débit 11 libère de façon intermittente le mélange métallisé qui, au travers du laitier, pénètre dans la fonte en fusion. Les électrodes 2 du four de fusion plongent dans le laitier 3 dans lequel l'arc électrique est formé. La fonte produite est évacuée par la goulotte 6, le laitier par la goulotte 5 et les gaz de combustion sont évacués par la goulotte 7 et réinjectés dans le four de réduction 8.

La fonte liquide peut être utilisée pour tout usage classique.

Le laitier peut subir une granulation et être utilisé pour les usages habituels du laitier de haut-fourneau notamment.

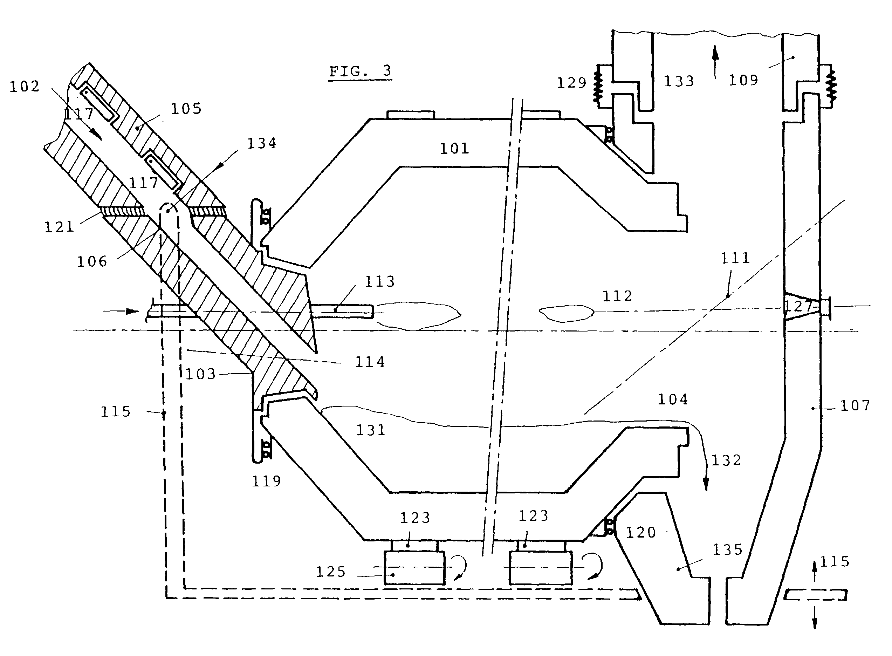

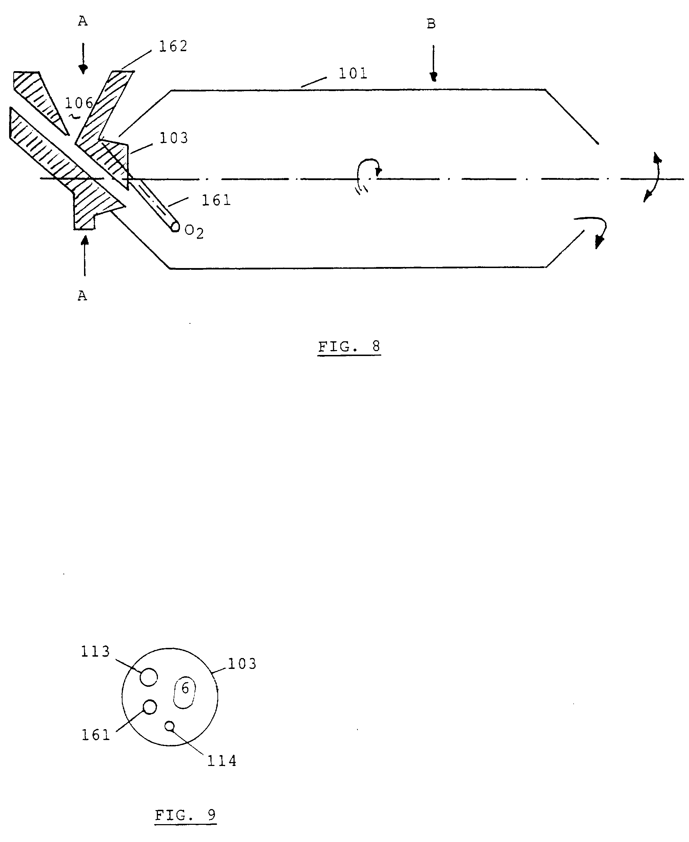

Dans les figures 3 à 9, on décrit une seconde variante d'exécution de l'invention. Les repères de référence suivants ont été utilisés.

### Nomenclature des figures 3 à 9

101. Four rotatif
102. DRI
103. Unité d'alimentation (disque)
104. Ouverture côté aval
105. Conduit d'alimentation
106. Goulotte d'alimentation
107. Unité d'évacuation de fonte liquide, de laitier et des gaz
109. Conduit d'évacuation des gaz
111. Lance de désulfurisation
112. Brûleur
113. Brûleur
114. Injection de charbon en poudre
115. Châssis
117. Double clapet
119. Joint d'étanchéité
120. Joint d'étanchéité
121. Elément compressible
123. Couronnes
125. Galets.
127. Fenêtre d'observation
129. Compensateur
131. Tas de DRI
132. Débordement de la charge liquide
133. Gaz
134. Point de pivotement
135. Entonnoir
137. Siphon
139. Fonte
141. Laitier

L'installation représentée à la figure 3 est constituée essentiellement d'une part par un four rotatif 101 pourvu à une extrémité (extrémité d'amont compte tenu du sens de déplacement des matières) d'une unité d'alimentation 103 de DRI 102 et à l'autre extrémité (côté aval) d'une ouverture 104 raccordée à une unité d'évacuation 107 de la fonte liquide et du laitier et à une unité d'évacuation des gaz 109.

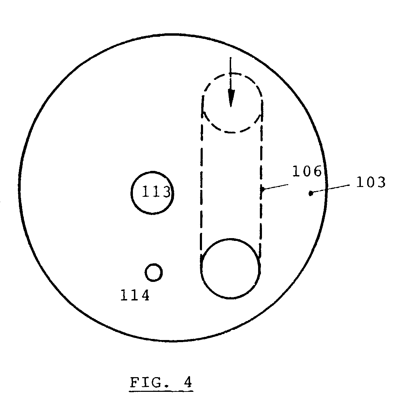

La figure 4 représente l'unité d'alimentation 103 composée entre autres d'un disque 103, formant tampon, pourvu d'une goulotte inclinée d'alimentation 106. Par ce même disque, un brûleur 113 débouche dans un four. La longueur de pénétration du brûleur dans le four est réglable afin d'optimaliser la fusion du tas de DRI 131 à l'entrée du four 101. Ce brûleur peut être monté du côté opposé, il peut également être dédoublé en disposant un brûleur de chaque côté. Le disque 103 peut être également pourvu d'un injecteur 114 de charbon en poudre. Un joint d'étanchéité périphérique 119 permet la rotation du four par rapport au disque fixe.

L'autre extrémité du four est ouverte et débouche d'une part vers l'unité 135 et d'autre part vers l'unité 109.

Des joints appropriés 120 sont à nouveau prévus pour permettre la rotation du four.

L'ensemble constitué par le four 101 et les unités 103, 107 et 135 (ou 137) est porté par un châssis 115. C'est sur ce châssis que sont montés des galets 125 supportant le four rotatif 101. Ce four est lui-même pourvu de couronnes 123 reposant sur les galets. Les galets 125 sont entraînés directement ou indirectement par un moteur (non représenté).

Le raccordement des extrémités de la goulotte 106 au conduit 105 est réalisé par un élément comprimable 121.

Le châssis dans son entièreté, avec les équipements rotatifs 101 et fixes 103, 107 et 135 (ou 137) qu'il supporte, peut être incliné par rapport à l'horizontale sur le point de pivotement 134 situé au niveau de ce raccordement.

Deux situations de travail sont prévues. Dans la première situation, le four est en production, son axe de rotation étant légèrement incliné.

Dans ce cas, par suite de la compressibilité du joint 121 de la goulotte 106 et du conduit 105, le mouvement de rotation maintient l'étanchéité de la liaison.

Par suite de la longueur du four rotatif 101, même une faible inclinaison peut entraîner un déplacement vertical de l'ordre de 10 à 20 cm de l'extrémité aval du four.

Le raccordement à l'unité d'évacuation des gaz 107 vers un conduit de recyclage 109 vers le four DRI et son étanchéité sont réalisés par un compensateur 129.

Une seconde situation de travail est celle dans laquelle le four doit subir une réfection importante. Dans ce cas, il suffit de désolidariser la goulotte 106 du conduit 105 pour pouvoir,déplacer le châssis avec l'unité intégrée. L'installation peut également être démontée en désolidarisant le four 101 de l'unité 103 à une extrémité et des unités 107 et 135 (ou 137) à l'autre extrémité (avec démontage, bien entendu, des différents joints et compensateurs).

Il est alors possible, par exemple si l'on souhaite une réfection complète du manteau réfractaire du four 101, de le disposer par exemple verticalement, des moyens appropriés de manutention étant prévus à cet effet.

Dans la pratique, l'installation de l'invention est conçue de manière à pouvoir être très rapidement soit démantelée et remplacée par une installation de réserve complète, soit partiellement démantelée et remplacée par un de ses éléments constitutifs.

Il est par exemple possible de déconnecter très rapidement l'installation du four d'alimentation DRI et de procéder à son remplacement par une installation de rechange préchauffée.

Divers équipements peuvent être prévus dans l'installation.

Aussi bien le four 101 que les unités 103, 107, 109 et 135 (ou 137) sont pourvus d'un revêtement réfractaire adéquat capable de résister aux températures et à la charge.

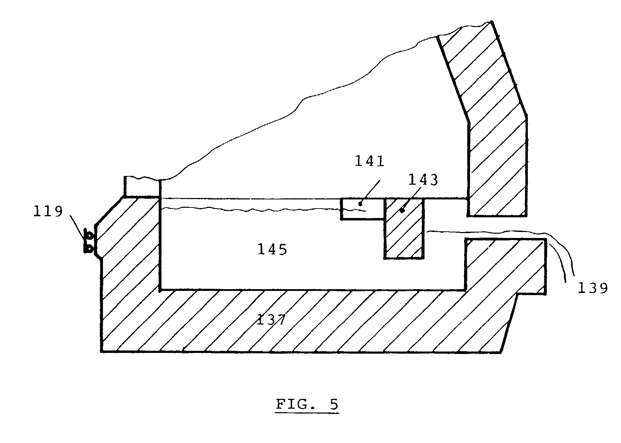

L'unité d'évacuation de la fonte liquide qui affecte de préférence la forme d'un entonnoir 135 comme représenté dans la figure 3, peut être pourvu d'un siphon 137 comme par exemple représenté dans la figure 5.

De même, il est possible de prévoir dans la paroi faisant face à l'ouverture 104, une fenêtre d'observation 127 par exemple.

Dans cette paroi, il est également possible de prévoir une lance de désulfurisation 111 ainsi qu'une lance à oxygène située à la partie supérieure du bord de l'ouverture 104 pour assurer un dégarnissage des dépôts de fonte et de laitier qui pourraient se former à ce niveau.

La géométrie du disque 103 ainsi que celle du revêtement de four 101 à l'endroit où ils se joignent est choisie de manière opportune pour assurer le meilleur fonctionnement possible de l'installation.

Par suite de l'inclinaison du four et bien entendu de sa forme représentée, il est nécessaire de garder un bain de matière fondue 131 tout en assurant un déplacement progressif de cette matière (de la gauche vers la droite dans la figure 3). La matière à traiter qui est alimentée est en principe plus légère que ce bain et "flotte" partiellement à sa surface.

Il convient de noter que la matière à traiter, en plus de sa fusion, subit une réduction finale dans le four et une carburation jusqu'à une teneur à 4% en carbone grâce à l'injection de charbon en poudre.

La chaleur nécessaire à la fusion est assurée essentiellement par rayonnement de la flamme du brûleur au-dessus de la charge et par celui des parois du four. En plus, le garnissage réfractaire chaud du four rotatif échauffe le bain par contact direct.

Contrairement aux réacteurs de fusion et fours électriques dans lesquels des usures rapides du revêtement résultant de l'attaque par le laitier sont généralement observées, se traduisant par une usure locale, un phénomène d'usure locale n'est pas observé dans l'installation de l'invention, ce qui contribue fortement à sa longévité.

Le brûleur monté sur le disque 103 peut avantageusement être déplacé longitudinalement par rapport à l'axe de rotation du four pour des réglages qui permettent notamment d'éviter une réoxydation de la matière alimentée. La même chose s'applique pour le brûleur 112 disposé éventuellement côté vidange.

Avantageusement, on prévoit, de préférence dans le conduit d'alimentation 105, un double clapet anti-retour 117 pour les gaz qui permet cependant le passage des matières solides alimentées dans le four. Ce clapet anti-retour est destiné à empêcher un refoulement des gaz de combustion du brûleur.

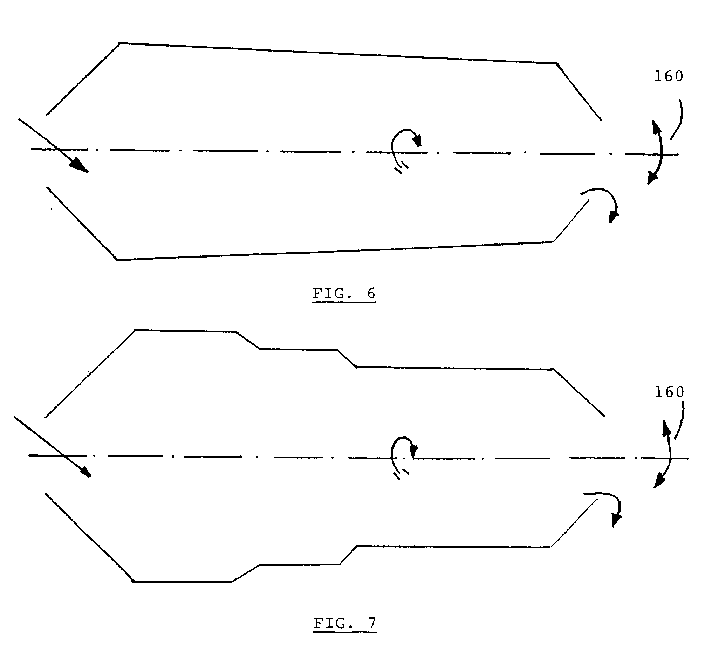

Dans les figures 6 et 7, on a illustré deux formes d'une installation équivalente à l'installation 101. Dans le cas de la figure 6, la forme est tronconique vers la sortie. Dans le cas de la figure 7, la forme présente des "escaliers" d'une extrémité à l'autre.

Ainsi qu'on l'a indiqué, il est avantageux que le four présente un diamètre à l'extrémité d'alimentation qui est supérieur au diamètre de l'extrémité d'évacuation.

De plus, ainsi que l'illustrent les flèches 160, le four peut effectuer un mouvement de basculement.

L'unité d'alimentation se présentant sous la forme générale d'un disque illustré par le repère 103 peut être équipée (comme déjà indiqué dans les demandes antérieures) d'un dispositif 114 d'injection de charbon en poudre, d'une lance à injection d'oxygène qui, de préférence, plonge dans la masse fondue et d'un brûleur 113. Il est apparu également avantageux de prévoir, par la goulotte d'alimentation 106 ou par un conduit complémentaire, la possibilité de recycler à l'aide par exemple d'un siphon 162 une partie de la fonte produite.

Dans les dessins, on a illustré un panneau de séparation partielle 163 entraîné par la rotation du four et pourvu d'une ouverture centrale 165 ainsi que d'ouvertures périphériques 164 tel qu'illustré. Ce panneau 163 permet l'évacuation des gaz et le transfert de la fonte vers l'extrémité d'évacuation d'un compartiment d'amont mais retient les scories rejetées et la mousse produite par une activité intense du bain lors de l'injection d'oxygène au moyen de la lance à oxygène 161.

Bien que l'on ait représenté une forme d'exécution préférée de l'invention, il doit être bien entendu que de nombreuses variantes d'exécution restent possibles dans le cadre des revendications qui suivent.

## Revendications

1. Installation pour la production de fonte liquide comprenant un four (1) de réduction pour réduire des oxydes de fer et un four de fusion (3) contenant une phase fondue de fonte et du laitier pour fondre les oxydes de fer réduits, ainsi que des unités d'évacuation de la fonte vers une installation d'affinage de la fonte (5) et des unités d'évacuation du laitier vers une installation de traitement du laitier (6), le four de réduction (1) et le four de fusion (3) étant reliés par un ou plusieurs conduits pour l'alimentation du four de fusion (3) en mélange de fer métallisé provenant du four de réduction par transfert gravitaire et un ou des conduits d'évacuation (4) des gaz de combustion du four de fusion (3) vers le four (1) de réduction, **caractérisé en ce que** le(s) conduit(s) d'alimentation est (sont) muni(s) de clapets régulateurs qui permettent d'accumuler une masse de mélange métallisé suffisamment importante pour pénétrer avec force après une hauteur de chute la fonte Liquide suite à son déversement.

2. Installation selon la revendication 1, **caractérisée en ce que** le four de fusion (3) est un four à induction, les courants d'induction provoquant un brassage du bain fondu, sans turbulences exagérées.

3. Installation selon la revendication 1, **caractérisée en ce que** le four de fusion (3) est un four à arc électrique, en particulier à arc submergé.

4. Installation selon la revendication 1, **caractérisée en ce que** le four de fusion (3) est constitué essentiellement d'une unité d'alimentation de la matière à traiter débouchant à une extrémité d'un four tubulaire rotatif dont l'extrémité opposée est ouverte et raccordée d'une part à une unité, de préférence en forme d'entonnoir, d'évacuation du fer fondu et du laitier, et d'autre part à une unité d'évacuation des gaz, un brûleur multiple combustible assurant l'apport thermique nécessaire pour la fusion de la matière à traiter.

5. Installation selon la revendication 2, **caractérisée en ce que** les éléments constitutifs du four de fusion Sont montés sur un châssis commun de manière d'une part à pouvoir incliner le four rotatif et les équipements complémentaires sans interruption de la production et d'autre part à permettre un échange rapide de l'ensemble ou de certains des éléments constitutifs.

6. Installation selon la revendication 4 ou 5, **caractérisée en ce que** l'unité d'alimentation est raccordée à un conduit ou goulotte monté sur l'unité de réduction (DRI) et qu'un point de pivotement du châssis en vue de réaliser une inclinaison de l'installation se situe de préférence au niveau de la ligne de raccordement, des compensateurs tels que des soufflets d'expansion assurant un raccordement étanche au gaz à ce niveau.

7. Installation selon l'une quelconque des revendications 4 à 6, **caractérisée en ce que** l'unité d'évacuation des gaz recueille essentiellement des gaz de combustion chauds, et est de préférence raccordée directement aux équipements en amont qui fournissent la matière à traiter dans l'installation.

8. Installation selon l'une quelconque des revendications 4 à 7, **caractérisée en ce que** l'unité d'alimentation en amont du four est constituée d'une goulotte d'alimentation ou de tout autre système d'alimentation adéquat tel qu'une vis d'Archimède, qui est monté sur un disque dans lequel débouche également le brûleur.

9. Installation selon la revendication 10, **caractérisée en ce que** le disque comporte un injecteur de charbon en poudre afin, d'une part, d'éviter une réoxydation de la charge, et d'autre part, de réaliser la réduction finale de l'éponge de fer et d'ajouter au bain le carbone nécessaira à l'obtention d'une fonte de qualité.

10. Installation selon l'une quelconque des revendications 4 à 9, **caractérisée en ce qu'**elle comporte des clapets qui permettent le passage des matières solides en empêchant un reflux gazeux.

11. Installation selon l'une quelconque des revendications 4 à 10, **caractérisée en ce que** la paroi faisant face à l'ouverture d'évacuation est pourvue d'une lance de désulfurisation de fonte, d'une fenêtre d'observation et éventuellement du brûleur inversé ou d'un deuxième brûleur.

12. Installation selon l'une quelconque des revendications 4 à 11, **caractérisée en ce que**, par suite de l'inclinaison du four et de la forme, il est possible de garder un bain de matière fondue tout en assurant un déplacement progressif de cette matière.

13. Installation selon l'une quelconque des revendications 4 à 12, **caractérisée en ce qu'**un châssis basculant permet l'interruption de la coulée continue pour permettre le remplacement des dispositifs de transfert remplis de fonte liquide.

## Patentansprüche

1. Anlage zur Produktion von flüssigem Roheisen, die einen Reduktionsofen (1) zur Reduktion von Eisenoxiden und einen Schmelzofen (3) umfasst, der eine geschmolzene Roheisenphase und Schlacke zum Schmelzen der reduzierten Eisenoxide sowie Austragvorrichtungen für das Roheisen in Richtung auf eine Frischungsanlage für das Roheisen (5) und Austragvorrichtungen für die Schlacke in Richtung auf eine Aufbereitungsanlage für die Schlacke (6) enthält, wobei der Reduktionsofen (1) und der Schmelzofen (3) über einen oder mehrere Schächte für die Versorgung des Schmelzofens (3) mit metallisiertem Eisengemisch, das, befördert durch die Schwerkraft, aus dem Reduktionsofen kommt, sowie eine oder mehrere Leitungen (4) für den Abzug der Verbrennungsgase aus dem Schmelzofen (3) zum Reduktionsofen (1) verbunden sind, **dadurch gekennzeichnet, dass** der/die Versorgungsschacht/ -schächte mit Regelklappen versehen ist/sind, die die Ansammlung einer Masse von metallisiertem Gemisch ermöglicht, die groß genug ist, dass sie nach ihrem Abschütten nach einer Fallhöhe das flüssige Roheisen mit Wucht durchquert.

2. Anlage nach Anspruch 1, **dadurch gekennzeichnet, dass** der Schmelzofen (3) ein Induktionsofen ist, wobei die Induktionsströme eine Bewegung des Schmelzbades ohne zu große Wirbelströmungen bewirken.

3. Anlage nach Anspruch 1, **dadurch gekennzeichnet, dass** der Schmelzofen (3) ein Lichtbogenofen, insbesondere ein Elektro-Reduktionsofen ist.

4. Anlage nach Anspruch 1, **dadurch gekennzeichnet, dass** der Schmelzofen (3) im Wesentlichen eine Beschickvorrichtung für das zu behandelnde Material umfasst, die an einem Ende eines Drehrohrofens mündet, dessen entgegengesetztes Ende offen ist und einerseits mit einer vorzugsweise trichterförmigen Austragvorrichtung für das geschmolzene Eisen und die Schlacke und andererseits mit einer Gasabzugsvorrichtung verbunden ist, wobei ein Brenner, der mit unterschiedlichen Brennstoffen arbeiten kann, die für das Schmelzen des zu behandelnden Materials erforderliche Wärmezufuhr sicherstellt.

5. Anlage nach Anspruch 2, **dadurch gekennzeichnet, dass** die Teile des Schmelzofens so auf ein gemeinsames Gestell montiert sind, dass sie einerseits den Drehofen und die zusätzlichen Ausrüstungen ohne Unterbrechung der Produktion schräg stellen und andererseits einen zügigen Austausch der ganzen Einheit oder bestimmter Teile ermöglichen können.

6. Anlage nach Anspruch 4 oder 5, **dadurch gekennzeichnet, dass** die Beschickvorrichtung mit einem Schacht oder einer Schurre verbunden ist, der/die an die Reduktionseinheit (DRI) montiert ist, und dass sich ein Drehpunkt des Gestells im Hinblick auf eine Neigung der Anlage vorzugsweise in Höhe der Verbindungslinie befindet, wobei Kompensatoren wie beispielsweise Balgkompensatoren in diesem Bereich für eine gasdichte Verbindung sorgen.

7. Anlage nach einem der Ansprüche 4 bis 6, **dadurch gekennzeichnet, dass** die Gasabzugsvorrichtung im Wesentlichen heiße Verbrennungsgase auffängt und vorzugsweise direkt an die vorgeschalteten Ausrüstungen montiert ist, welche das in der Anlage zu behandelnde Material anliefern.

8. Anlage nach einem der Ansprüche 4 bis 7, **dadurch gekennzeichnet, dass** die dem Ofen vorgeschaltete Beschickvorrichtung eine Beschickschurre oder ein beliebiges anderes geeignetes Beschicksystem wie eine archimedische Schnecke ist, das/die an eine Scheibe montiert ist, in die auch der Brenner mündet.

9. Anlage nach Anspruch 10, **dadurch gekennzeichnet, dass** die Scheibe eine Düse zum Einblasen von Kohlenstaub umfasst, die einerseits eine erneute Oxidation des Schmelzguts verhindern und andererseits für die endgültige Reduktion des Eisenschwamms sorgen und dem Bad die für den Erhalt eines Roheisens guter Qualitität erforderliche Menge an Kohlenstoff zuschlagen soll.

10. Anlage nach einem der Ansprüche 4 bis 9, **dadurch gekennzeichnet, dass** sie Klappen umfasst, welche die festen Stoffe passieren lassen, einen Gasrückfluss jedoch verhindern.

11. Anlage nach einem der Ansprüche 4 bis 10, **dadurch gekennzeichnet, dass** die Wand, die der Austragöffnung gegenüber liegt, mit einer Entschwefelungslanze für das Roheisen, einem Schauloch und eventuell einem mit dem Umkehrbrenner oder einem zweiten Brenner versehen ist.

12. Anlage nach einem der Ansprüche 4 bis 11, **dadurch gekennzeichnet, dass** es durch das Neigen des Ofens und die Form möglich ist, ein Bad mit geschmolzenem Material unter gleichzeitigem allmählichen Weiterbewegen dieses Materials aufrechtzuerhalten.

13. Anlage nach einem der Ansprüche 4 bis 12, **dadurch gekennzeichnet, dass** ein Kippgestell die Unterbrechung des Stranggusses zum Austausch der mit flüssigem Roheisen gefüllten Fördervorrichtungen erlaubt.

## Claims

1. Installation for the production of liquid pig iron comprising a reducing furnace (1) for the reduction of iron oxides and a melting furnace (3) containing a molten phase of pig iron and slag in order to melt the reduced iron oxides, and units for discharging the pig iron to a pig iron refining plant (5) and units for discharging the slag to a slag treatment plant (6), the reducing furnace (1) and the melting furnace (3) being connected by one or more pipes for supplying the melting furnace (3) with a mixture of the metallised iron coming from the reducing furnace by transfer under gravity and one or more pipes (4) for discharging combustion gases from the melting furnace (3) to the reducing furnace (1) **characterised in that** the supply pipe or pipes is or are provided with regulating flap valves allowing the accumulation of a mass of metallised mixture sufficiently large, after falling through a certain height, to penetrate the liquid pig iron forcefully after it has been poured.

2. Installation according to Claim 1, **characterised in that** the melting furnace (3) is an induction furnace, the induction currents causing agitation of the molten bath, without excessive turbulence.

3. Installation according to Claim 1, **characterised in that** the melting furnace (3) is an electric arc furnace, in particular a submerged-arc furnace.

4. Installation according to Claim 1, **characterised in that** the melting furnace (3) consists essentially of a unit for supplying the material to be treated, emerging at one end from a rotary tubular furnace whose opposite end is open and is connected firstly to a unit, preferably funnel-shaped, for discharging the molten iron and the slag and secondly to a gas discharge unit, a combined fuel burner providing the supply of heat required for melting the material to be treated.

5. Installation according to Claim 2, **characterised in that** the elements constituting the melting furnace are mounted on a common chassis so as firstly to be capable of tilting the rotary furnace and the ancillary equipment without interrupting the production, and secondly to make possible a rapid exchange of the assembly or of certain of its constituent elements.

6. Installation according to Claim 4 or 5, **characterised in that** the feed unit is connected to a pipe or chute mounted on the DRI reduction unit and **in that** a fulcrum of the chassis provided to produce an inclination of the installation is preferably located at the level of the connecting line, expansion joints such as expansion bellows ensuring a gas-tight connection at this level.

7. Installation according to any one of Claims 4 to 6, **characterised in that** the gas discharge unit mainly takes in hot combustion gases and is preferably connected directly to upstream equipment that supplies the material to be treated to the installation.

8. Installation according to any one of Claims 4 to 7, **characterised in that** the supply unit upstream from the furnace consists of a feed chute or any other suitable system of supply such as an Archimedean screw, which is mounted on a disc into which the burner also emerges.

9. Installation according to Claim 10, **characterised in that** the disc comprises a pulverised coal injector in order, firstly, to avoid a reoxidation of the charge and, secondly, to achieve the final reduction of the sponge iron and to add to the bath the coal required to obtain a high grade pig iron.

10. Installation according to any one of Claims 4 to 9, **characterised in that** it comprises flap valves allowing the passage of solid materials while preventing a gaseous reflux.

11. Installation according to any one of Claims 4 to 10, **characterised in that** the wall facing the discharge opening is provided with a lance for the desulphurisation of the pig iron, with an observation window and possibly with an inverted burner or a second burner.

12. Installation according to any one of Claims 4 to 11, **characterised in that**, because of the inclination of the furnace and the shape, it is possible to retain a bath of molten material while ensuring a progressive movement of this material.

13. Installation according to any one of Claims 4 to 12, **characterised in that** a tilting chassis allows the interruption of the continuous casting in order to make possible the replacement of the transfer devices filled with liquid pig iron.
